# EUROPEAN PATENT APPLICATION

(11) **EP 1 671 935 A1**
(43) Date of publication of application: **21.06.2006**
(21) Application number: 05027677.3
(22) Date of filing: 16.12.2005
(51) Int. Cl.: C03C 17/25, C03C 17/34

(54) **Dispersing liquid and manufacturing method for dispersing liquid**

(30) Priority: 16.12.2004 KR 2004107434
(71) Applicant: LG Electronics Inc., Yongdungpo-Gu Seoul (KR)
(72) Inventor: Kim, Young Sung, Yongin-si Gyeonggi-do (KR)
(74) Representative: Beyer, Andreas

(57) **Abstract**

There is provided a dispersing liquid for a protective film and a manufacturing method thereof. The manufacturing method of a dispersing liquid for forming a protective film of a plasma display panel comprises adding a MgO powder to a mixed liquid of a solvent and a dispersing agent, forming a first liquid by milling a mixed liquid of the solvent and the dispersing agent to which the MgO powder is added, forming a second liquid comprising a coupling agent and milling the first liquid and the second liquid. Therefore, it is possible to improve a discharge characteristic of a protective film and an adhesive force between a protective film and a dielectric layer due to uniform dispersion of additives by comprising a MgO powder and a coupling agent.

## Description

### BACKGROUND OF THE INVENTION

### Field of the Invention

The present document relates to a dispersing liquid for a protective film and a manufacturing method thereof.

### Description of the Background Art

A conventional plasma display panel displays an image between two glass substrates using a gas discharge phenomenon between electrodes. In the conventional plasma display panel, because it is not required that active elements are fixed to each cell, a manufacturing process is simple, a large screen is easily manufactured, and a response speed is fast.

The conventional plasma display panel comprises a front substrate and a rear substrate. The front substrate and the rear substrate are disposed apart a predetermined space and coupled in parallel to each other. A manufacturing process of the front substrate comprises steps of forming an electrode pattern in an electrode member, forming an electrode by developing depending on the electrode pattern, firing the electrode, forming a dielectric layer on the electrode, and protecting a dielectric layer from sputtering of an ion and forming a protective film consisting of a magnesium oxide.

A method of using a MgO powder in order to form the protective film is suggested, but there is a problem that it is difficult to uniformly mix materials such as a silicone or a titanium added to the MgO powder in order to improve a discharge characteristic of the protective film and the materials can not have a predetermined adhesive force or more.

### SUMMARY OF THE INVENTION

Accordingly, an object of the present invention is to solve at least the problems and disadvantages of the background art.

An object of the present invention is to provide a manufacturing method of a dispersing liquid for a protective film which can uniformly mix additives for improving a discharge characteristic.

Another object of the present invention is to provide a manufacturing method of a dispersing liquid for a protective film which can improve an adhesive force.

According to an aspect of the present invention, there is provided a manufacturing method of a dispersing liquid for forming a protective film of a plasma display panel comprises adding a MgO powder to a mixed liquid of a solvent and a dispersing agent, forming a first liquid by milling a mixed liquid of the solvent and the dispersing agent to which the MgO powder is added, forming a second liquid comprising a coupling agent and milling the first liquid and the second liquid.

According to another aspect of the present invention, there is provided a manufacturing method of a dispersing liquid for forming a protective film of a plasma display panel, comprises mixing a coupling agent to a solvent and adding a MgO powder to a mixed liquid of the coupling agent and the solvent and milling a mixed liquid of the MgO powder, the coupling agent and the solvent.

According to still another aspect of the present invention, there is provided a dispersing liquid for forming a protective film of a plasma display panel comprising: a MgO powder; a dispersing agent dispersing particles of the MgO powder; a solvent increasing liquidity; and a coupling agent improving a adhesion force between particles of the MgO powder.

According to the present invention, it is possible to improve a discharge characteristic of a protective film due to a uniform diffusion of additives.

According to the present invention, it is possible to improve an adhesive force of a protective film and a dielectric layer.

### BRIEF DESCRIPTION OF THE DRAWINGS

The invention will be described in detail with reference to the following drawings in which like numerals refer to like elements.
FIG. 1 is a diagram illustrating a manufacturing method of a dispersing liquid for a protective film according to a first embodiment of the present invention;
FIG. 2 is a diagram illustrating a manufacturing method of a dispersing liquid for a protective film according to a second embodiment of the present invention;
FIG. 3 is a graph illustrating a change of a discharge firing voltage according to a composition percent of MgO and additives;
FIG. 4A is a view illustrating a section of a protective film having no coupling agent;
FIG. 4B is a view illustrating a section of a protective film formed by using a dispersing liquid for a protective film according to a first embodiment and a second embodiment of the present invention.

### DETAILED DESCRIPTION OF PREFERRED EMBODIMENTS

Preferred embodiments of the present invention will be described in a more detailed manner with reference to the drawings.

According to an aspect of the present invention, there is provided a manufacturing method of a dispersing liquid for forming a protective film of a plasma display panel, the method comprising: adding a MgO powder to a mixed liquid of a solvent and a dispersing agent; forming a first liquid by milling a mixed liquid of the solvent and the dispersing agent to which the MgO powder is added; forming a second liquid comprising a coupling agent; and milling the first liquid and the second liquid.

The second liquid may further comprise a solvent.

When the weight percent of a total dispersing liquid is 100wt%, the weight percent of the MgO powder may be from 5wt% to 10wt%.

When the weight percent of a total dispersing liquid is 100wt%, the weight percent of the coupling agent may be 50wt% or less.

The coupling agent may be at least one of a titanate, a zirconate, an aluminate, and a silane.

The dispersing liquid may furthercomprised a titanium.

Density of the titanium may be from 0mol% to 5.23mol%.

The dispersing liquid may further comprise a silicone.

According to another aspect of the present invention, there is provided a manufacturing method of a dispersing liquid for forming a protective film of a plasma display panel, the methodcomprising: mixing a coupling agent to a solvent and adding a MgO powder to a mixed liquid of the coupling agent and the solvent; and executing milling.

When the weight percent of a total dispersing liquid is 100wt%, the weight percent of the MgO powder may be from 5wt% to 10wt%.

When the weight percent of a total dispersing liquid is 100wt%, the weight percent of the coupling agent may be 50wt% or less.

The coupling agent may be at least one of a titanate, a zirconate, an aluminate, and a silane.

The dispersing liquid may further comprise a titanium.

Density of the titanium may be from 0mol% to 5.23mol%.

According to still another aspect of the present invention, there is provided a dispersing liquid for forming a protective film of a plasma display panel comprising: a MgO powder; a dispersing agent dispersing particles of the MgO powder; a solvent increasing liquidity; and a coupling agent improving a adhesion force between particles of the MgO powder.

The coupling agent may be at least one of a titanate, a zirconate, an aluminate, and a silane.

The dispersing liquid may further comprise a titanium.

Density of the titanium may be from 0mol% to 5.23mol%.

When the weight percent of a total dispersing liquid is 100wt%, the weight percent of the coupling agent may be 50wt% or less.

When the weight percent of a total dispersing liquid is 100wt%, the weight percent of the MgO powder may be from 5wt% to 10wt%.

Hereinafter, exemplary embodiments of the present invention will be described in detail with reference to the accompanying drawings.

### <First Embodiment>

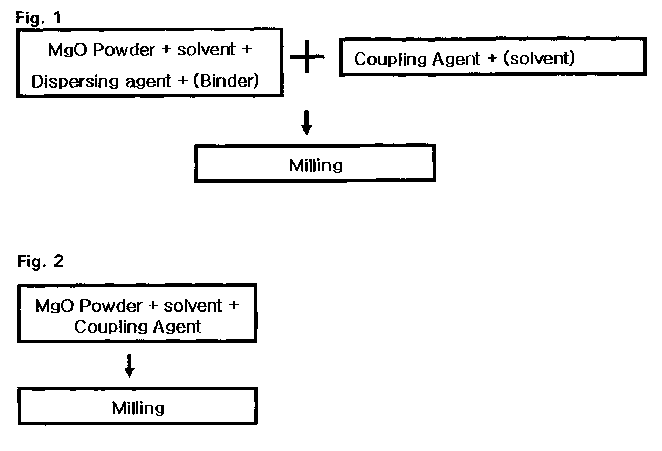

FIG. 1 is a diagram illustrating a manufacturing method of a dispersing liquid for a protective film according to a first embodiment of the present invention. In a manufacturing method of a dispersing liquid according to the first embodiment of the present invention, a coupling material is used as an additive.

As shown in FIG. 1, a dispersing liquid according to the first embodiment of the present invention is formed by mixing a first liquid and a second liquid. A process of forming the first liquid comprises mixing a solvent and a dispersing agent and putting a MgO powder to a mixture of the solvent and the dispersing agent and milling them.

When the weight percent of a total dispersing liquid is 100wt%, the weight percent of the MgO powder is from 5wt% to 10wt%. In addition, in order to improve an adhesive force between a protective film and a dielectric layer, a dispersing liquid for a protective film according to the first embodiment of the present invention can further comprise a binder.

A process of forming the second liquid comprises steps of mixing a coupling agent to a solvent and milling a mixture of a solvent and a titanate. Because the solvent is to improve liquidity of the coupling agent, the second liquid may consist of only a coupling agent. When the weight percent of a total dispersing liquid is 100wt%, the weight percent of the coupling agent is 50wt% or less.

Thereafter, because the first liquid and the second liquid are mixed to each other and a mixture of the first liquid and the second liquid are milled, a dispersing liquid for a protective film according to the first embodiment of the present invention is formed.

### <Second Embodiment>

FIG. 2 shows a manufacturing method of a dispersing liquid for a protective film according to a second embodiment of the present invention. As shown in FIG. 2, a manufacturing method of a dispersing liquid for a protective film according to the second embodiment comprises mixing a titanate that is a coupling agent to a solvent; adding a MgO powder to the mixture of the coupling agent and the solvent and milling a mixture of a coupling agent, a solvent, and a MgO powder. When the weight percent of a total dispersing liquid is 100wt%, the weight percent of the MgO powder is from 5wt% to 10wt%. When the weight percent of a total dispersing liquid is 100wt%, the weight percent of the coupling agent is 50wt% or less.

A coupling agent of a dispersing liquid for a protective film according to the second embodiment of the present invention also serves as a dispersing agent.

As a coupling agent comprised in a dispersing liquid according to the first embodiment and the second embodiment of the present invention, there are a titanate using a titanium as a base, a zirconate using a zirconium (Zr) as a base, an aluminate using an aluminum (Al) as a base, and a silane made of a silicone.

A coupling agent comprised in a dispersing liquid according to the first embodiment and the second embodiment of the present invention increases an adhesive force between particles of a MgO powder and an adhesive force between a protective film and a dielectric layer.

In addition, when a dispersing liquid according to the first embodiment and the second embodiment of the present invention further comprises a silicone or a titanium to improve a discharge characteristic of a protective film, a silicone or a titanium is uniformly mixed to a MgO powder by a coupling agent. That is, when the first liquid and the second liquid are mixed by milling and then the silicone or the titanium is added to the mixed liquid, a structure of a coupling agent is changed to that in which organic matters are connected to a silicone or a titanium. Because a liquid coupling agent having such a structure is uniformly dispersed between MgO powder particles, the MgO powder and a silicone or a titanium are uniformly mixed.

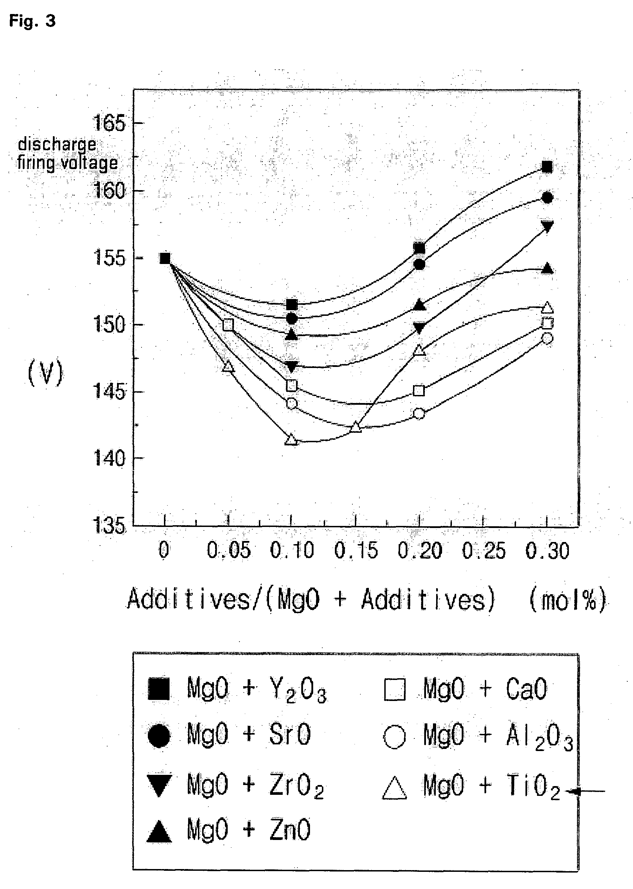

FIG. 3 is a graph illustrating a change of a discharge firing voltage according to a composition percent of MgO and additives. As shown in FIG. 3, state, a discharge firing voltage in a state that TiO₂ is added, i.e., in a case where TiO₂/(MgO+TiO₂) is 0.3mol% or less is lower than that in a state that additives are not added, i.e., in a case where additives/(MgO+additives) is 0.

Table 1 shows a composition percent of MgO and TiO₂, density for each component of a protective film, and the density percent of Mg and Ti.

**[Table 1]**

| Ti0₂ /(MgO+TiO₂) (mol%) | Density for each component of a protective film (mol%) | | | Ti/(Mg+Ti) (mol%) |
|---|---|---|---|---|
| | Mg | Ti | O | |
| 0 | 49.4 | 0 | 50.6 | 0 |
| 0.1 | 43.14 | 2.45 | 54.41 | 0.054 |
| 0.2 | 41.24 | 4.2 | 54.56 | 0.092 |
| 0.3 | 39.6 | 5.23 | 55.17 | 0.117 |

As shown in Table 1, when a composition percent (TiO₂/(MgO+TiO₂)) of Ti0₂ and MgO is from 0 to 0.3, density of Ti is from 0mol% to 5.23mol%. In a dispersing liquid for a protective film according to the first embodiment and the second embodiment of the present invention, because a coupling agent is comprised and the added Ti is uniformly mixed, a discharge firing voltage can be lowered. That is, when Ti having density of 0mol% to 5.23mol% is comprised in a dispersing liquid according to the first embodiment or the second embodiment of the present invention, a discharge firing voltage is lowered.

**[Table 2]**

| | O (mol%) | Mg (mol%)Ti | (mol%) |
|---|---|---|---|
| E-Beam | 55.9 | 44.1 | |
| Dispersing liquid of the present invention to which titanate of 20 weight% is added | 62.4 | 34.7 | 2.9 |

In Table 2, according to the first embodiment and the second embodiment of the present invention, when a titanate of 20wt% is added a titanium of about 3mol% is added, but Ti is not added with a conventional E-Beam deposition method. Therefore, a dispersing liquid according to the first embodiment and the second embodiment of the present invention has a more excellent discharge characteristic than a protective film formed by the conventional E-Beam deposition method.

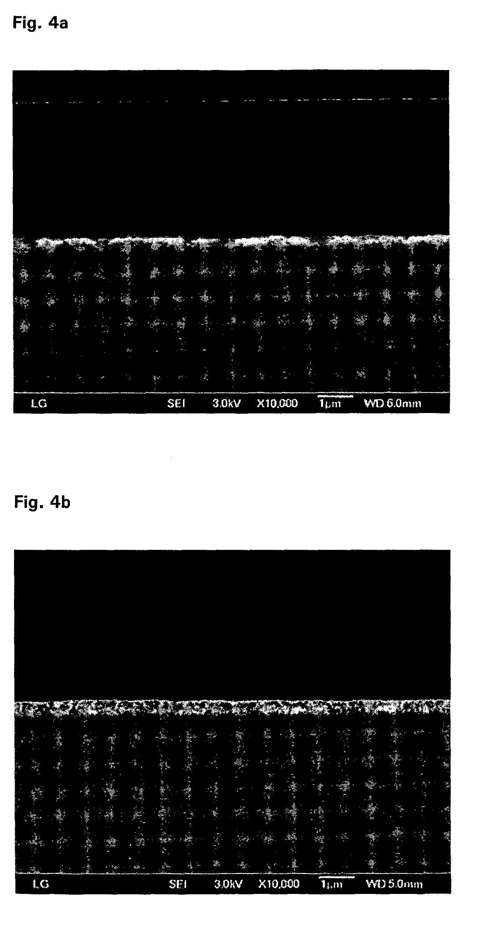

FIG. 4A is a view illustrating a section of a protective film having no coupling agent. FIG. 4B is a view illustrating a section of a protective film formed by using a dispersing liquid for a protective film according to a first embodiment and a second embodiment of the present invention.

As shown in FIG. 4A, when a coupling agent is not mixed, an adhesive force and surface uniformity of a protective film and a dielectric layer are not good. However, because a dispersing liquid for a protective film according to the first embodiment and the second embodiment of the present invention comprises a coupling agent, an adhesive force and surface uniformity of a protective film and a dielectric layer are good as shown in FIG. 4b. Accordingly, it is possible to coat a thin protective film on the dielectric layer.

The invention being thus described, it will be obvious that the same may be varied in many ways. Such variations are not to be regarded as a departure from the spirit and scope of the invention, and all such modifications as would be obvious to one skilled in the art are intended to be comprised within the scope of the following claims.

## Claims

1. A manufacturing method of a dispersing liquid for forming a protective film of a plasma display panel, the method comprising:
adding a MgO powder to a mixed liquid of a solvent and a dispersing agent;
forming a first liquid by milling the mixed liquid of the solvent and the dispersing agent, to which the MgO powder is added;
forming a second liquid comprising a coupling agent; and
milling the first liquid and the second liquid.

2. The manufacturing method of claim 1, wherein the second liquid further comprises a solvent.

3. The manufacturing method of claim 1, wherein when the weight percent of the dispersing liquid is 100wt%, the weight percent of the MgO powder is from 5wt% to lowt%.

4. The manufacturing method of claim 1, wherein when the weight percent of the dispersing liquid is 100wt%, the weight percent of the coupling agent is 50wt% or less.

5. The manufacturing method of claim 1, wherein the coupling agent is at least one of a titanate, a zirconate, an aluminate, and a silane.

6. The manufacturing method of claim 1, wherein the dispersing liquid further comprises a titanium.

7. The manufacturing method of claim 6, wherein density of the titanium is from 0mol% to 5.23mol%.

8. The manufacturing method of claim 1, wherein the dispersing liquid further comprises a silicone.

9. A manufacturing method of a dispersing liquid for forming a protective film of a plasma display panel, the method comprising:
mixing a coupling agent with a solvent and adding a MgO powder to a mixed liquid of the coupling agent and the solvent; and
milling a mixed liquid of the MgO powder, the coupling agent and the solvent.

10. The manufacturing method of claim 9, wherein when the weight percent of the dispersing liquid is 100wt%, the weight percent of the MgO powder is from 5wt% to 10wt%.

11. The manufacturing method of claim 9, wherein when the weight percent of the dispersing liquid is 100wt%, the weight percent of the coupling agent is 50wt% or less.

12. The manufacturing method of claim 9, wherein the coupling agent is at least one of a titanate, a zirconate, an aluminate, and a silane.

13. The manufacturing method of claim 9, wherein the dispersing liquid further comprises a titanium.

14. The manufacturing method of claim 13, wherein the density of the titanium is from 0 mol% to 5.23mol%.

15. A dispersing liquid for forming a protective film of a plasma display panel comprising:
a MgO powder;
a dispersing agent dispersing particles of the MgO powder;
a solvent increasing liquidity; and
a coupling agent improving a adhesion force between the particles of the MgO powder.

16. The dispersing liquid of claim 15, wherein the coupling agent is at least one of a titanate, a zirconate, an aluminate, and a silane.

17. The dispersing liquid of claim 15, wherein the dispersing liquid further comprises a titanium.

18. The dispersing liquid of claim 17, wherein the density of the titanium is from 0mol% to 5.23mol%.

19. The dispersing liquid of claim 15, wherein when the weight percent of the dispersing liquid is 100wt%, the weight percent of the coupling agent is 50wt% or less.

20. The dispersing liquid of claim 15, wherein when the weight percent of the dispersing liquid is 100wt%, the weight percent of the MgO powder is from 5wt% to 10wt%.
